# NEW EUROPEAN PATENT SPECIFICATION

(11) **EP 1 848 203 B2**
(45) Date of publication and mention of the opposition decision: **02.05.2018**
(45) Mention of the grant of the patent: 13.05.2009
(21) Application number: 06008001.7
(22) Date of filing: 18.04.2006
(51) Int. Cl.: H04N 5/44

(54) **Method and system for video image aspect ratio conversion**
Verfahren und System für die Bildseitenverhältnisumwandlung eines Videobildes
Méthode et système de conversion de format d'une image vidéo

(43) Date of publication of application: 24.10.2007
(73) Proprietor: Vestel Elektronik Sanayi ve Ticaret A.S., 45030 Manisa (TR)
(72) Inventor: Demiryurekli, Okyay Vestel Elektronik, 45030 Manisa (TR)
(74) Representative: Ascherl, Andreas

(56) References cited:
- EP-A1- 1 592 246
- JP-A- H07 131 734
- US-A- 5 534 934
- US-A1- 2004 212 731
- US-A1- 2004 212 731
- US-A1- 2005 008 347
- US-A1- 2005 253 964
- US-A1- 2006 061 687

## Description

The present invention relates to video image processing technology, and more particularly to a method and system for video image aspect ratio conversion.

This invention concerns processing methods and electronic systems, which may or may not incorporate a display device, for enabling received video having one aspect ratio to be displayed in a display device having another, different, aspect ratio.

The rectangular shape of the video image, so called aspect ratio, is described as the ratio of the visible picture width to the height. Standard television and computers have an aspect ratio of 4:3 (1.33), which means that the picture is 4 units wide for every 3 units of height. Meanwhile, the new high definition television (HDTV) standard is 16:9; accordingly HDTV's 16:9 ratio is a rectangle that is, relatively speaking, horizontally wider than regular TV, which by comparison looks almost square. Film and video aspect ratios include 1.66:1 (used mostly for animated features), 1.85:1 or 1.78:1 (commonly known as 16:9 or Academic Flat Ratio) and 2.35:1 (called Cinescope™, or "scope" for short, which is usually used in action movies).

Currently, the majority of television transmission standards have a nominal picture aspect ratio of 4:3. As a result, up to now most television receivers have been provided with a display screen having the same (4:3) aspect ratio. However, an increasing number of television receivers are being manufactured with a display screen having an aspect ratio of 16:9; in order to display, or be ready to display, high definition (HD) video and TV, once such HDTV broadcast systems are operational. Thus, there exist several methods that are being used in available products, to make the necessary format conversion of the video signal so that it can be displayed on the screen having the wider aspect ratio.

Changing the size of the video frame using hardware acceleration is known as scaling. Scaling an image to an arbitrary size requires high quality scaling engines to prevent aliasing artefacts when down-scaling, and to retain sharpness when up-scaling.

Converting a 4:3 aspect ratio standard definition video to a 16:9 wide aspect ratio high definition video involves scaling an image so as to contain as much as six times the number of pixels it had originally. How this is done determines the quality of the scaled image. There are many different methods of scaling an NTSC video image which has an aspect ratio of 4:3, to fit the high definition technology of an HDTV, which has an aspect ratio of 16:9.

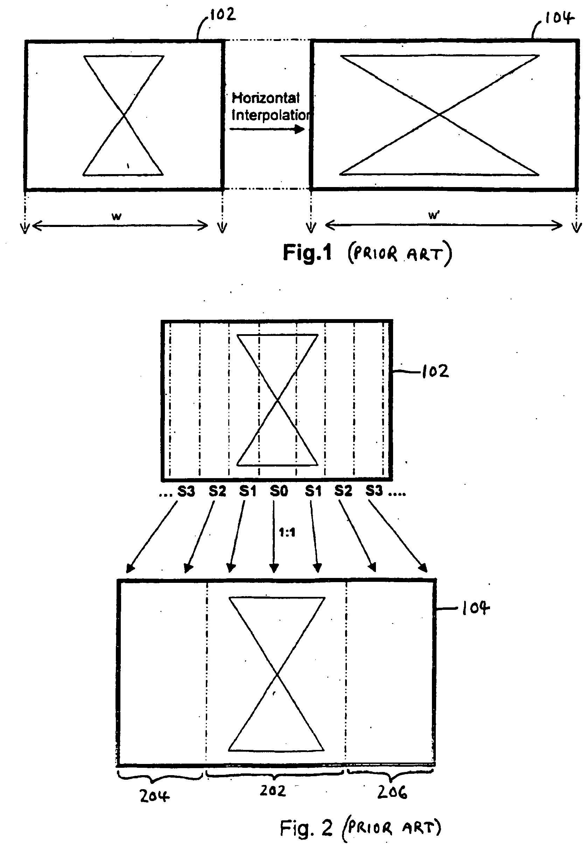

One of the conventional methods is to linearly stretch the 4:3 images in the horizontal direction to a more rectangular 16:9 image, to fill the entire screen by keeping all the original image content. This technique is illustrated in Fig. 1: horizontal interpolation is used, for example so that the resolution (width w) increases from 640 pixels/line to 853 pixels/line (w'), when converting the original 4:3 image 102 (at 640x480 resolution) to the 16:9 converted image 104 (at 853x480 resolution). However, linear horizontal scaling distorts the overall image by 33 percent, in such a way that, for example, narrow images look wider than they originally are, or thin people look fatter. Although linear scaling requires some computational power in terms of system requirements and adds particular hardware and software features and involves relatively low cost increase, the visual result is not acceptable in most situations.

The current trend is towards to a more advanced technique, which is non-linear scaling: this is illustrated in Fig. 2. This method aims to keep the picture quality pleasing and acceptable to the viewer by leaving the middle portion 202 of the 4:3 image unchanged, but horizontally stretching the left 204 and right 206 portions of the image, to thereby achieve an aspect ratio of 16:9. The middle 202 of the image does not appear distorted at all, but the left 204 and right 206 portions are increasingly deteriorated. However, the human visual system typically focuses on the middle 202 of the screen and not on the edges: therefore implementing the actual scaling on portions where human eyes are less sensitive to image distortions produces generally acceptable results.

Referring to Fig. 2, in non-linear scaling the picture 102 to be converted is divided into several scaling areas with several scaling factors (S0, S1, S2, S3...). The scaling factor for the central area (SO) is 1 so that the image in the centre is not scaled. The rest of the scaling factors (S1, S2, S3...) are calculated according to the desired source and destination pixel ratios.

Non-linear scaling (also called 'Panorama' mode), requires more computational power than linear scaling, and can also be used to scale *down* a 16:9 image for display on a display screen having an aspect ratio of 4:3.

Non-linear horizontal scaling has begun to be widely used because of its advantages in eliminating the unexpected distortion caused by linear scaling. Non-linear horizontal scaling makes it possible to fill the whole wide screen with the picture content, while disturbing the viewer as little as possible.

However, non-linear scaling has one important disadvantage when the video images to be displayed include sliding text or sliding picture elements in the transmitted video content. Such content is common with news (e.g. scrolling headlines), informational (e.g. sports scores and tickers) and general TV programming, where additional text (for example) scrolls, normally from right to left, across the screen at or near the bottom. Such material (that scrolls horizontally across the screen) will hereinafter be referred to as horizontally scrolling text or HST.

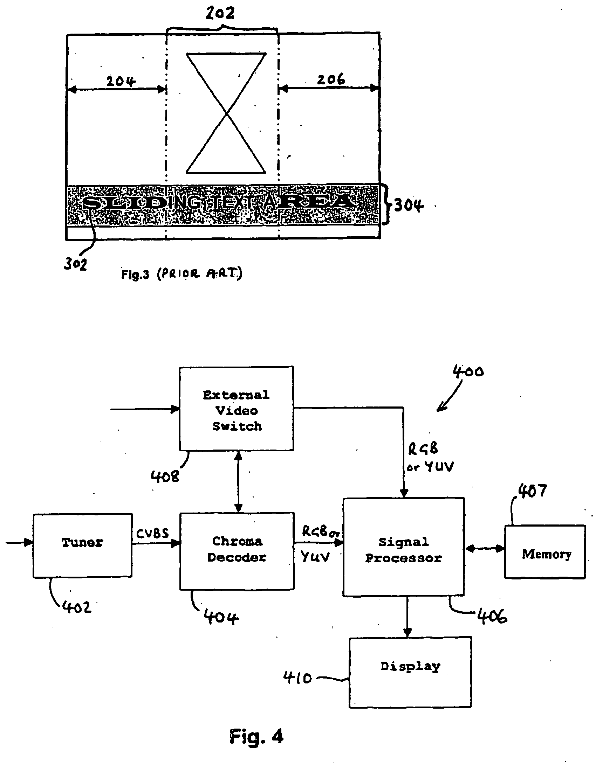

When non-linear horizontal scaling is applied to such video signals, it is found that the HST is distorted such that the speed of the HST is not the same at all portions 202, 204, 206 of the screen, which have different scaling factors. Also, the width of the characters 302 in the HST is not the same in all the portions 202, 204, 206 of the screen, but rather different in different portions of the screen. In this situation, HST appears as if it is spinning and the HST area 304 seems concave or convex; in other words, flatness and shape of the area 304 and text 302 is deteriorated. This problem is illustrated in Fig. 3. As mentioned earlier, stationary objects in the image do not suffer from this problem.

EP534220B1 discloses techniques for resizing video signals (enlarge/decrease), e.g. for displaying 4:3 picture on 16:9 displays, using (linear) interpolation, as well as electronics involved in implementing the resizing, using pixelwise conversion and spatial filtering.

US5386236 discloses techniques for displaying 4:3 video on 16:9 displays, using interpolation. It comprises: removing a predetermined number (30) of upper and lower scanning lines having unimportant information in a vertical direction from a video signal having a screen aspect ratio of 4:3; performing vertical interpolation by the removed scanning lines to restore an original number of scanning lines; and performing time-compression of a predetermined rate in a horizontal direction and displaying a video signal on a screen having a screen aspect ratio of 16:9 by assigning a position of the compressed image.

EP662272B1 discloses techniques, useful for displaying 4:3 pictures in 16:9 displays, for detecting the presence of subtitles within the undisplayed part of a picture and for shifting any such subtitles so detected to a displayed part of the received picture. This allows pictures transmitted in the 4:3 format to be expanded to fill a 16:9 format display without losing the subtitles when the lower portion of the picture, which may contain at least part of the subtitle information, is then outside the display area as a result of the picture expansion.

US 2006/0061687A1 discloses a system for displaying 4:3 content on a 16:9 display, including a detector for detecting a dynamic region that may contain subtitles, text, symbols, written language, etc. A static region displays the main picture. The system operates (though vertical scaling) to fit the static region (at instants when there are no subtitles or other material in the dynamic region) or static region + dynamic region (at instants when there are subtitles or other material in the dynamic region) to the active region (display area) of the display device.

US 2005/0008347 discloses a method of processing a subtitle stream, a reproducing apparatus, and an information storage medium (e.g. DVD) thereof. The information storage medium includes an AV stream, a subtitle stream which is displayed with the AV stream, and conversion information which indicates an instruction to change a format (4:3, 16:9, etc.) of the subtitle stream.

US 2004/0212731 A1 discloses a video distribution system, using techniques for video aspect ratio conversion. The video distribution system distributes a video program in a first aspect ratio and simultaneously transmits video conversion information, used at the receiving end to convert the first aspect ratio to a second aspect ratio. Included in the video distribution system are a distribution point and a video converter that is located remotely from the distribution point. The video converter receives the information and the video program from the distribution point. The video converter uses the video conversion information to guide conversion between the first aspect ratio and the second aspect ratio.

JP07-131734 discloses a television receiver with a title moving circuit which signal is inputted into a synthesizing processing circuit and compounder together with the videosignal. The compounded signal is then processed in the nonlinear processing circuit to display an aspect ratio of 16:9.

The present invention provides a method of converting video images, according to claim 1.

The one or more remaining sections of the first video images may include a relatively narrow section on the side of said first section opposite the main picture section. For example, this may be a narrow band of the original picture below the HST area. Preferably, the conversion operation performed on said relatively narrow section is identical to that performed on the first section. Alternatively, the conversion operation performed on said relatively narrow section is identical to that performed on the main picture section.

According to another aspect of the invention there is provided a video processing system when suitably programmed for carrying out the method of any of the appended claim, or according to any of the particular embodiments disclosed herein.

According to another aspect of the invention there is provided a video processing system according to claim 5.

The system may include a chroma detector, adapted to receive first video signals (CVBS) and output second video signals (RGB or YUV) to the signal processor.

Embodiments of the invention will now be described in detail, by way of example, with reference to the accompanying drawings, in which:
Figure 1 (PRIOR ART) shows schematically conventional linear scaling techniques forconverting4:3 video to 16:9;
Figure 2 (PRIOR ART) illustrates schematically conventional non-linear scaling techniques for converting 4:3 video to 16:9;
Figure 3 (PRIOR ART) shows problems arising with the techniques of Fig. 2;
Figure 4 illustrates schematically a television system according to one embodiment of the invention;
Figure 5 shows schematically the different processing operations for different image sections, as used by the signal processor in the system of Fig. 4;
Figure 6 illustrates the segmentation, in accordance with embodiments of the invention, of the video images into different sections;
Figure 7 shows by flow chart the HST detection part of the process of Fig. 5
Figure 8 illustrates the motion of video vectors in the video images, as determined in the process of Fig. 7;
Figure 9 shows a HST area having an opaque background; and
Figure 10 illustrates a HST area without an opaque background.

In the description and drawings, like numerals are used to designate like elements.

It will be apparent to persons skilled in the art that -
- As used herein, the "video signals" may be analog or digital, and may be subject to conventional analog or digital filtering.
- Where references are made herein to steps, operations or manipulations involving "video images", etc., these are implemented, where appropriate, by means of operations upon electronically processable representations (e.g. video frame signals, bitstream video data, MPEG files or video streams, PC-video, or any other viewable or broadcastable video data format) of such "video images".
- Where references are made herein to steps, operations or manipulations involving "video images", "video signals" or "video data", these are implemented, where appropriate, by means of software controlled processor operations, hardware circuitry or any suitable combination of these.
- While the present invention is suitably embodied in a television system, it may be incorporated in an adaptor, a video mixer, VCR, DVD or any other equipment located between a video source and a display device (e.g. CRT, LCD, Plasma, projector, etc.).

Figure 4 illustrates schematically a television system according to one embodiment of the invention. Stated briefly, the TV system, generally designated 400, comprises a tuner 402, a chroma decoder 404 a signal processor 406, memory 407, an external video switch or source 408, and a display device 410.

However, as will be appreciated by persons skilled in the art, the present invention may be embodied in
(i) a video processor incorporating chroma decoder 404 and signal processor 406,
(ii) a video adaptor (e.g. for coupling to and/or upgrading an analog TV), and incorporating tuner 402, chroma decoder 404 and signal processor 406,
(iii) a video source or reproduction equipment (e.g. VCR, DVD) incorporating chroma decoder 404 a signal processor 406, and external video switch or source 408.

Returning to Fig. 4, the diagram illustrates the general circuit diagram of the TV receiver including components known to skilled persons. For example, a desired channel is selected by the user and obtained by the tuner 402. CVBS (colour TV/video) signals which come from the tuner 402 are separated, and RGB or YUV signals are created, by chroma decoder 404. (Alternatively, external CVBS signals, for example from a VCR, DVD or hard disk video source are switched to chroma decoder 404 by external video switch 404.) Thus, YUV or RGB signals are switched to signal processor 406.

Signal processor 406 contains the display driver and microcontroller (not shown), and processes in accordance with the invention are carried out by the signal processor 406 in conjunction with memory 407. Memory 407 may comprise ROM, RAM, or any suitable nonvolatile or volatile solid-state memory devices, or combination thereof, as is known to persons skilled in the art. The signal processor 406 achieves all the necessary processing on video signals and drives the display 410.

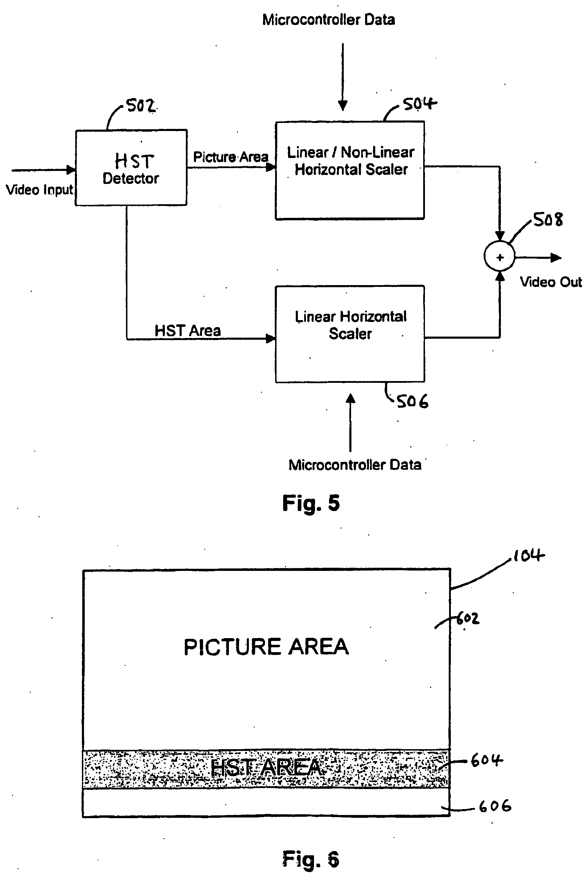

Figure 5 shows schematically the different processing operations for different image sections, as used by the signal processor 406 in the system of Fig. 4. This is suitably carried out in software, but for the purpose of illustration is shown by block diagram. Figure 6 illustrates the segmentation, in accordance with embodiments of the invention, of the video images into different sections.

As is seen in Fig. 5, the input video signals (RGB/YUV) are first acted upon by the HST detector 502. Upon HST being detected, the video data for the main picture area is routed to a linear/non-linear scaler module 504, which performs non-linear scaling on the main picture section 602 (see Fig. 6). Separately, the video data for the HST section is routed to a linear scaler module 506, which performs linear scaling on the HST section 604 (see Fig. 6). In this case, the image 102 includes a lower section 606 on the side of the HST section opposite the main picture section 602. This may be subject to linear or non-linear scaling, but preferably has the same scaling as HST area 604. The system itself determines the scaling technique to be applied to lower section 606, considering the height of lower section 606 or the factors such as HST section 604 being transparent or opaque. For example, it may apply linear scaling when the background is transparent and non-linear scaling when the background is opaque, or vice versa.

The solution according to the invention is based on the automatic detection of HST section 604 which is superimposed on the broadcasted video information, then applying linear horizontal scaling to that portion of the video image and applying non-linear horizontal scaling to the rest of the video image (section 602) containing the main picture information. HST section 604 and the main picture section 602 are thereafter joined (at combining module 508) to make a single picture (video data) after the scaling process.

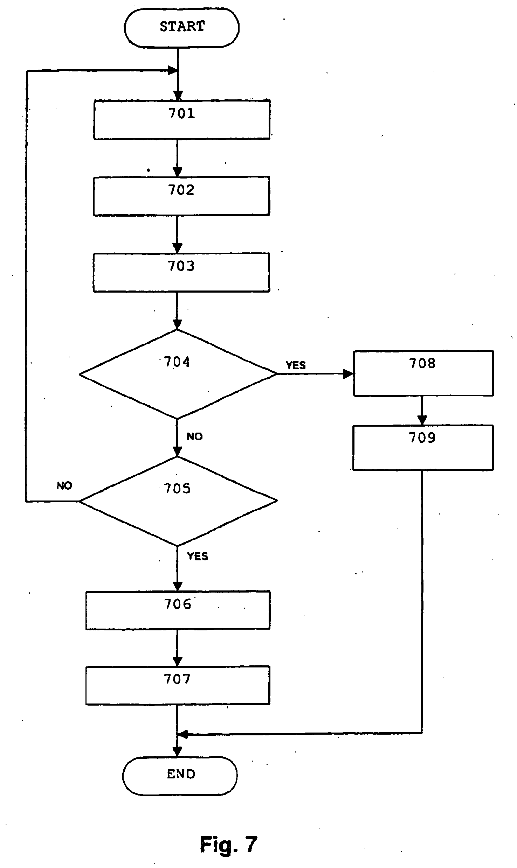

Figure 7 shows by flow chart the HST area detection part of the process of Fig. 5.

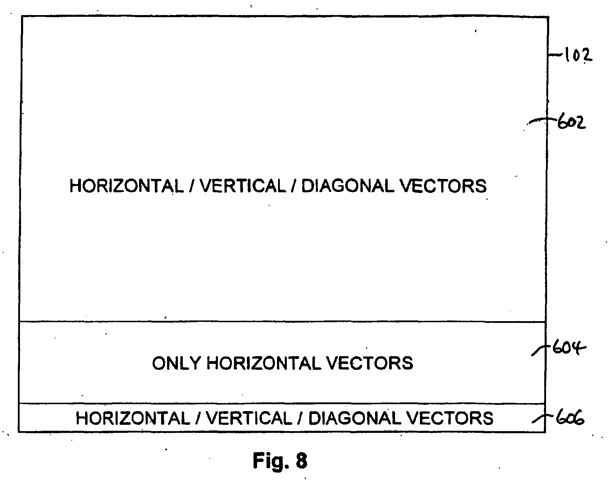

The process begins with analog to digital conversion step, performed by an Analog/Digital Converter (ADC) in the signal processor 406 (see Fig. 4); the ADC converts the analog video signal to a digital video signal at a predetermined bit resolution, i.e. for example the processing resolution of the signal processor 406Step 701 comprises finding movement vectors of small areas by comparing current video frame to the old (previous) frames. In step 702, the last determined video frames are sent to memory 407 to be stored. Step 703 comprises finding the area(s) with line groups having only one way (left or right) horizontal vectors. Figure 8 illustrates the motion of video vectors in the video images. In the main picture section 602 there may be horizontal, vertical and/or diagonal vectors, in the HST area 604 there may be only horizontal vectors, and in the lower area 606 there may be horizontal, vertical and/or diagonal vectors.

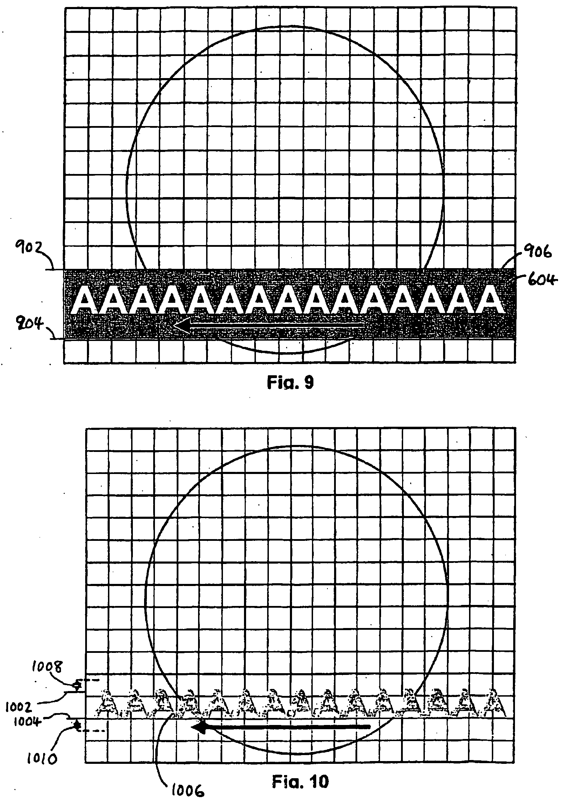

Next, at step 704, it is determined whether the background colour of the HST area 604 is opaque. Figure 9 shows a HST area 604 having an opaque background 906. If the condition is met, then in step 708, the line numbers of the most upper 902 and lower 904 lines of opaque background 906 are found. The upper and lower line numbers are received in step 709.

If the background colour is not opaque, step 705 determines if the background is transparent. Figure 10 illustrates a HST area without an opaque background, i.e. a transparent background. If the condition is met, the line numbers of the most upper 1002 and lower 1004 lines of HST 1006 is found in step 706. Step 707 is to add determined buffer lines on above 1008 and below 1010 the HST 1006.

The foregoing process determines the area limits of sections 602, 604 and 606 (see Fig. 6).

It will be appreciated that the techniques are applicable when the HST is at the top of the video image as well as at the bottom, and in fact can operate when the HST are in any part of the video image.

One of the several known software methods can be used for non-linear and linear scaling (see the aforementioned EP534220B1, US5386236 and EP662272B1).

In another embodiment of the invention, HST detection can be done manually by the viewer, i.e. by means of the arrow keys on the remote controller, the processor 406 being suitably programming to receive and/or detect this user selection.

In yet another embodiment of the invention, microcontroller data (see Fig. 5) includes the information as to whether the scaling process should used on the video picture or not. This information is constructed from commands received via the remote controller (not shown) of the viewer of the TV system, the processor 406 being suitably programming to receive and/or detect this user selection. Consequently, user can determine if he/she wants the receiver to run the whole process (segmentation, separated scaling), or whether he/she wishes to watch the program/video in the distorted mode.

## Claims

1. A method of converting video images, comprising:
receiving first video images (102) having a first aspect ratio;
converting (502-506) the first video images to second video images (104), the second video images having a second aspect ratio, different from the first aspect ratio, said converting including a horizontal scaling operation; and
outputting the second video images (104);
**characterised by** said converting step including detecting (701-709) the presence in the first video images of horizontally scrolling text and/or horizontally scrolling image elements (302); and in that
the horizontal scaling operation (506) performed on a first section (604) of the first video images (102) that contains the horizontally scrolling text and/or horizontally scrolling image elements (302) is different from the horizontal scaling operation (504) performed on one or more remaining sections (602, 606) of the first video images, wherein the conversion operation (506) performed on the first section (604) of the first video images (102) is linear scaling and wherein one of said one or more remaining sections (602, 606) of the first video images (102) comprises the main picture section (602) and the conversion operation (504) performed on said main picture section (602) is non-linear scaling, **wherein the first section (604) after the linear scaling is joined with the one or more remaining sections (602, 606) after the non linear-scaling to make a single picture.**

2. The method of claim 1, wherein said one or more remaining sections (602, 606) of the first video images (102) includes a relatively narrow section (606) on the side of said first section (604) opposite the main picture section (602).

3. The method of claim 2, wherein the conversion operation (504) performed on said relatively narrow section (606) is identical to that performed on the first section (604).

4. The method of claim 2, wherein the conversion operation (504) performed on said relatively narrow section (606) is identical to that performed on the main picture section (602).

5. A video processing system, comprising:
a signal processor (406), adapted to receive video signals (102), and
a memory device (407), coupled to the signal processor (406),
wherein the signal processor (406) is operable in conjunction with the memory device (407) for carrying out the steps of
receiving first video images (102) having a first aspect ratio;
converting (502-506) the first video images to second video images (104), the second video images having a second aspect ratio, different from the first aspect ratio, said converting including a horizontal scaling operation; and
outputting the second video images (104);
**characterised by** said converting step including
detecting (701-709) the presence in the first video images of horizontally scrolling text and/or horizontally scrolling image elements (302); and in that
the horizontal scaling operation (506) performed on a first section (604) of the first video images (102) that contains the horizontally scrolling text and/or horizontally scrolling image elements (302) is different from the horizontal scaling operation (504) performed on one or more remaining sections (602, 606) of the first video images, wherein the conversion operation (506) performed on the first section (604) of the first video images (102) is linear scaling and wherein one of said one or more remaining sections (602, 606) of the first video images (102) comprises the main picture section (602); and the conversion operation (504) performed on said main picture section (602) is non-linear scaling, **wherein the first section (604) after the linear scaling is joined with the one or more remaining sections (602, 606) after the non linear-scaling to make a single picture.**

6. The system of claim 5, wherein further including a chroma detector (404), adapted to receive first video signals (CVBS) and output second video signals (RGB or YUV) to the signal processor (406).

7. A video adaptor comprising the system of any of claims 5 or 6, and further comprising a tuner (402) adapted to receive signals from an antenna and output first video signals (CVBS).

8. A video generation system comprising the system of any of claims 5 or 6, and further comprising a video switch (408) or a video playback device for playing recorded video.

9. A television system (400) comprising the system of any of claims 5 or 6 and a display device (410).

10. A recordable, rewritable or storable medium having recorded or stored thereon data defining or transformable into instructions for execution by processing circuitry and corresponding to at least the steps of any of claims 1 to 4.

11. A server computer incorporating a communications device and a memory device and being adapted for transmission on demand or otherwise of data defining or transformable into instructions for execution by processing circuitry and corresponding to at least the steps of any of claims 1 to 4.

## Patentansprüche

1. Verfahren zum Konvertieren von Videobildern, Folgendes umfassend:
Empfangen erster Videobilder (102) mit einem ersten Seitenverhältnis;
Konvertieren (502 bis 506) der ersten Videobilder in zweite Videobilder (104), wobei die zweiten Videobilder ein zweites Seitenverhältnis aufweisen, welches von dem ersten Seitenverhältnis verschieden ist, wobei das Konvertieren eine horizontale Skalieroperation umfasst; und
Ausgeben der zweiten Videobilder (104); **dadurch gekennzeichnet, dass** der Schritt des Konvertierens ein Detektieren (701 bis 709) des Vorhandenseins von horizontal rollendem Text und/oder horizontal rollenden Bildelementen (302) in den ersten Videobildern umfasst; und dadurch, dass die horizontale Skalieroperation (506), welche an einem ersten Abschnitt (604) der ersten Videobilder (102) durchgeführt wird, welcher den horizontal rollenden Text und/oder die horizontal rollenden Bildelemente (302) enthält, von der horizontalen Skalieroperation (504) verschieden ist, welche an einem oder mehreren verbleibenden Abschnitten (602, 606) der ersten Videobilder durchgeführt wird, wobei die Konvertierungsoperation (506), welche an dem ersten Abschnitt (604) der ersten Videobilder (102) durchgeführt wird, lineares Skalieren ist und wobei einer des einen oder der mehreren verbleibenden Abschnitte (602, 606) der ersten Videobilder (102) den Hauptbildabschnitt (602) umfasst und die Konvertierungsoperation (504), welche an dem Hauptbildabschnitt (602) durchgeführt wird, nichtlineares Skalieren ist, **wobei der erste Abschnitt (604) nach dem linearen Skalieren mit dem einen oder den mehreren verbleibenden Abschnitten (602, 606) nach dem nichtlinearen Skalieren zusammengefügt wird, um ein einzelnes Bild anzufertigen.**

2. Verfahren nach Anspruch 1, wobei der eine oder die mehreren verbleibenden Abschnitte (602, 606) der ersten Videobilder (102) einen relativ schmalen Abschnitt (606) auf der Seite des ersten Abschnitts (604) gegenüber des Hauptbildabschnitts (602) umfassen.

3. Verfahren nach Anspruch 2, wobei die Konvertierungsoperation (504), welche an dem relativ schmalen Abschnitt (606) durchgeführt wird, identisch zu derjenigen ist, welche an dem ersten Abschnitt (604) durchgeführt wird.

4. Verfahren nach Anspruch 2, wobei die Konvertierungsoperation (504), welche an dem relativ schmalen Abschnitt (606) durchgeführt wird, identisch zu derjenigen ist, welche an dem Hauptbildabschnitt (602) durchgeführt wird.

5. Videoverarbeitungssystem, Folgendes umfassend:
einen Signalprozessor (406), welcher eingerichtet ist, Videosignale (102) zu empfangen, und
eine Speichervorrichtung (407), welche an den Signalprozessor (406) angeschlossen ist,
wobei der Signalprozessor (406) zusammen mit der Speichervorrichtung (407) betriebsfähig ist, die folgenden Schritte auszuführen
Empfangen erster Videobilder (102) mit einem ersten Seitenverhältnis;
Konvertieren (502 bis 506) der ersten Videobilder in zweite Videobilder (104), wobei die zweiten Videobilder ein zweites Seitenverhältnis aufweisen, welches von dem ersten Seitenverhältnis verschieden ist, wobei das Konvertieren eine horizontale Skalieroperation umfasst; und
Ausgeben der zweiten Videobilder (104);
**dadurch gekennzeichnet, dass** der Schritt des Konvertierens ein Detektieren (701 bis 709) des Vorhandenseins von horizontal rollendem Text und/oder horizontal rollenden Bildelementen (302) in den ersten Videobildern umfasst; und dadurch, dass die horizontale Skalieroperation (506), welche an einem ersten Abschnitt (604) der ersten Videobilder (102) durchgeführt wird, welcher den horizontal rollenden Text und/oder die horizontal rollenden Bildelemente (302) enthält, von der horizontalen Skalieroperation (504) verschieden ist, welche an einem oder mehreren verbleibenden Abschnitten (602, 606) der ersten Videobilder durchgeführt wird, wobei die Konvertierungsoperation (506), welche an dem ersten Abschnitt (604) der ersten Videobilder (102) durchgeführt wird, lineares Skalieren ist und wobei einer des einen oder der mehreren verbleibenden Abschnitte (602, 606) der ersten Videobilder (102) den Hauptbildabschnitt (602) umfasst; und die Konvertierungsoperation (504), welche an dem Hauptbildabschnitt (602) durchgeführt wird, nichtlineares Skalieren ist, **wobei der erste Abschnitt (604) nach dem linearen Skalieren mit dem einen oder den mehreren verbleibenden Abschnitten (602, 606) nach dem nichtlinearen Skalieren zusammengefügt wird, um ein einzelnes Bild anzufertigen.**

6. System nach Anspruch 5, weiterhin umfassend einen Chromadetektor (404), welcher eingerichtet ist, erste Videosignale (CVBS) zu empfangen und zweite Videosignale (RGB oder YUV) an den Signalprozessor (406) auszugeben.

7. Videoanpassungsvorrichtung, welche das System nach einem der Ansprüche 5 oder 6 umfasst und weiterhin einen Tuner (402) umfasst, welcher eingerichtet ist, Signale von einer Antenne zu empfangen und erste Videosignale (CVBS) auszugeben.

8. Videoerzeugungssystem, welches das System nach einem der Ansprüche 5 oder 6 umfasst und weiterhin einen Videoschalter (408) oder eine Videowiedergabevorrichtung zum Abspielen von aufgezeichnetem Video umfasst.

9. Fernsehsystem (400), welches das System nach einem der Ansprüche 5 oder 6 und eine Anzeigevorrichtung (410) umfasst.

10. Aufzeichnungsfähiges, wiederbeschreibbares oder speicherfähiges Medium mit darauf aufgezeichneten oder gespeicherten Daten, welche Befehle zur Ausführung durch einen Verarbeitungsschaltkomplex und entsprechend mindestens der Schritte nach einem der Ansprüche 1 bis 4 definieren oder in diese transformierbar sind.

11. Server-Computer, welcher eine Kommunikationsvorrichtung und eine Speichervorrichtung enthält und zur Übertragung auf Abruf oder auf andere Weise von Daten eingerichtet ist, welche Befehle zur Ausführung durch einen Verarbeitungsschaltkomplex und entsprechend mindestens der Schritte nach einem der Ansprüche 1 bis 4 definieren oder in diese transformierbar sind.

## Revendications

1. Procédé de conversion d'images vidéo, comprenant de :
recevoir des premières images (102) ayant un premier rapport d'aspect ;
convertir (502-506) les premières images vidéo en secondes images vidéo (104), les secondes images vidéo ayant un second rapport d'aspect, différent du premier rapport d'aspect, ladite conversion incluant une opération de mise à l'échelle horizontale ; et
délivrer les secondes images vidéo (104) ;
**caractérisé par** ladite étape de conversion incluant la détection (701-709) de la présence dans les premières images vidéo de texte déroulable horizontalement et/ou d'éléments d'image déroulants horizontalement (302) ; et en ce que
l'opération de mise à l'échelle horizontale (506) effectuée sur une première section (604) des premières images vidéo (102) qui contient le texte déroulable horizontalement et/ou les éléments d'image déroulants horizontalement (302) est différente de l'opération de mise à l'échelle horizontale (504) effectuée sur une ou plusieurs sections restantes (602,606) des premières images vidéo, dans lequel l'opération de conversion (506) effectuée sur la première section (604) des premières images vidéo (102) est une mise à l'échelle linéaire et dans lequel une desdites une ou plusieurs sections restantes (602,606) des premières images vidéo (102) comprend la section d'image principale (602) et l'opération de conversion (504) effectuée sur ladite section d'image principale (602) est une mise à l'échelle non linéaire, dans lequel la première section (604) après la mise à l'échelle linéaire est jointe à une ou plusieurs sections restantes (602,606) après la mise à l'échelle non linéaire pour produire une image unique.

2. Procédé selon la revendication 1, dans lequel lesdites une ou plusieurs sections restantes (602, 606) des premières images vidéo (102) inclut une section relativement étroite (606) sur le côté de ladite première section (604) opposée à la section d'image principale (602).

3. Procédé selon la revendication 2, dans lequel l'opération de conversion (504) effectuée sur ladite section relativement étroite (606) est identique à celle effectuée sur la première section (604).

4. Procédé selon la revendication 2, dans lequel l'opération de conversion (504) effectuée sur ladite section relativement étroite (606) est identique à celle effectuée sur la section d'image principale (602) .

5. Système de traitement vidéo, comprenant :
un processeur de signaux (406), adapté pour recevoir des signaux vidéo (102) et
un dispositif de mémoire (407), couplé au processeur de signaux (406),
dans lequel le processeur de signaux (406) est opérationnel en liaison avec le dispositif de mémoire (407) pour mettre en oeuvre les étapes de réception des premières images vidéo (102) ayant un premier rapport d'aspect ;
conversion (502-506) des premières images vidéo en secondes images vidéo (104), les secondes images vidéo ayant un second rapport d'aspect, différent dudit premier rapport d'aspect, ladite conversion incluant une opération de mise à l'échelle horizontale ; et
délivrance des secondes images vidéo (104) ;
**caractérisé par** ladite étape de conversion incluant de détecter (701-709) la présence dans les premières images vidéo de texte déroulable horizontalement et/ou d'éléments d'image déroulants horizontalement (302) ; et en ce que
l'opération de mise à l'échelle horizontale (506) effectuée sur une première section (604) des premières images vidéo (102) qui contient le texte déroulable horizontalement et/ou les éléments d'image déroulants horizontalement (302) est différente de l'opération de mise à l'échelle horizontale (504) effectuée sur une ou plusieurs sections restantes (602,606) des premières images vidéo, dans lequel l'opération de conversion (506) effectuée sur la première section (604) des premières images vidéo (102) est une mise à l'échelle linéaire et dans lequel une desdites une ou
plusieurs sections restantes (602,606) des premières images vidéo (102) comprend la section d'image principale (602) et l'opération de conversion (504) effectuée sur ladite section d'image principale (602) est une mise à l'échelle non linéaire, dans lequel la première section (604) après la mise à l'échelle linéaire est jointe à une ou plusieurs sections restantes (602,606) après la mise à l'échelle non linéaire pour produire une image unique.

6. Système selon la revendication 5, incluant en outre un détecteur de saturation (404), adapté pour recevoir des premiers signaux vidéo (CVBS) et délivrer des seconds signaux vidéo (RGB ou YUV) au processeur de signaux (406).

7. Adaptateur vidéo comprenant le système selon une quelconque des revendications 5 ou 6, et comprenant en outre un syntoniseur (402) adapté pour recevoir des signaux provenant d'une antenne et délivrer des premiers signaux vidéo (CVBS).

8. Système de génération vidéo comprenant le système selon une quelconque des revendications 5 ou 6, et comprenant un commutateur vidéo (408) et un appareil de playback vidéo pour lire une vidéo enregistrée.

9. Système de télévision (400) comprenant le système selon une quelconque des revendications 5 ou 6 et un dispositif d'affichage (410).

10. Support enregistrable, réinscriptible ou mémorisable sur lequel sont enregistrées ou mémorisées des données définissant ou transformables en instructions à des fins d'exécution par un circuit de traitement et correspondant au moins aux étapes d'une quelconque des revendications 1 à 4.

11. Serveur informatique incorporant un dispositif de communication et un dispositif de mémoire et étant adapté pour une transmission à la demande ou sinon de données définissant ou transformables en instructions à des fins d'exécution par un circuit de traitement et correspondant au moins aux étapes d'une quelconque des revendications 1 à 4.
